(19) Europäisches Patentamt

European Patent Office

Office européen des brevets

(11) **EP 1 640 756 A1**

(12) **EUROPEAN PATENT APPLICATION**

(43) Date of publication:
**29.03.2006 Bulletin 2006/13**

(51) Int Cl.:
*G02B 6/42* (2006.01)  *G02B 6/00* (2006.01)

(21) Application number: **04447214.0**

(22) Date of filing: **27.09.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **BARCO N.V.**
**8500 Kortrijk (BE)**

(72) Inventors:
• **Verstraete, Gerrit**
  **8740 Pittem (BE)**
• **De Brabander, Gino**
  **9100 Sint-Niklaas (BE)**

(74) Representative: **Bird, William Edward et al**
**Bird Goen & Co.,**
**Klein Dalenstraat 42A**
**3020 Winksele (BE)**

(54) **Methods and systems for illuminating**

(57)     Methods and systems are described for illumination in different applications. Real thin illumination systems (200) with good luminance uniformity, good efficiency and good colour mixing uniformity are obtained, even if different light sources emitting different colours are used. A plurality of light sources (102), emitting light from different colours, couple their light sideways, i.e. substantially parallel to the plane of light out-coupling, into a light guiding means (104) through recesses (108) distributed over the light guiding means (104). Providing a specially structured surface pattern (106), in combination with light in-coupling parallel to the plane of light out-coupling of the light guiding means (104) allows to obtain a good colour mixing of the differently coloured light originating from the plurality of light sources (102). The light then is only coupled out after it has been in the light guiding means (104) for a significant long time such that the light emanating from different light sources (102) is significantly mixed. The illumination system (200) has an important application in non-emissive displays.

**Fig. 6**

EP 1 640 756 A1

## Description

## Technical field of the invention

The present invention relates to a method and system for providing illumination. More specifically, a method and system are described for illuminating applications using a thin illumination system, especially suitable as backlight system in non-emissive display systems.

## Background of the invention

The display market for large illumination applications is still expanding. Applications can be found in advertising, lighting, displaying, etc. A significant segment of today's display market is focussed on thin flat panel display systems having a high brightness. The latter allows a comfortable use of the display systems for many applications, even in environments where a large amount of environmental light is present. Non-emissive flat panel displays using a backlight system as illumination source are well known and widely spread. Although, compared to traditional television systems such as cathode ray tubes, backlight illuminated flat panel displays are characterised by a significantly reduced thickness, the quest for further reducing the thickness continues.

Well known backlight illumination systems are a direct backlight system, i.e. a backlight system with light sources laid out on the back of the display panel, and an edge-emitting backlight system, i.e. a backlight system with light sources laid out at the edges of the display panel that couple light into a thin light guide. The light then subsequently is coupled out of the thin light guide in a controlled way.

The use of light sources having different colours in backlight systems is advantageous as it allows obtaining a wide colour gamut. However, using these light sources, such as using e.g. red, green and blue LEDs, always requires the use of an initial mixing zone for the light. The latter is necessary to obtain uniform brightness and colour mixing of the light emitted by the light sources. Nevertheless, the need for such a mixing zone increases the complexity of the system. In these systems, the colour mixing problem is solved either by using a multiple of light guides, by a wedge or by complex long-shaped metallic reflector geometries, each having serious disadvantages. The use of multiple light guides increases, i.e. approximately doubles, the thickness and cost of the light guide. Furthermore it cannot guarantee the uniformity of brightness in the middle of the screen. Wedge-shaped light guides are complex and furthermore induce uniformity problems in the neighbourhood of the wedge top. When long-shaped metallic reflectors are used, the optical efficiency significantly drops. The mixing zone in the air inside those complex reflectors is relatively short and therefore does not guarantee a good mixing of the colours. In general, the brightness is limited for all edge-lit approaches as the number of light sources, e.g. LEDs, that can be provided at the edges or borders of the backlight system is limited. Especially for large displays, the latter implies an important limit on the brightness. Other disadvantages of these systems comprise mechanical constraints such as limitation on connecting the flex cables coming out of the panel with the LCD drivers due to the thickness and the difficulty to sink the heat generated by the LED array(s).

An example of an edge-lit backlight system using light sources with different colours is e.g. described by Y. Martynov et al. in SID 03 Digest (2003) p1259. The edge-lit backlight system comprises an initial light guiding means for mixing the light emitted by the light sources having different colours and a second light guiding means for coupling out the mixed light. The system requires cylindrical elliptical mirrors to guide the light from the initial light guiding means to the second light guiding means and has a relatively large thickness as two light guides on top of each other are needed.

In SID04 Digest (2004) p1226, Folkerts describes a backlighting system using white side emitting LEDs, whereby the light is coupled into a light guide via body coupling with either a through or a blind hole. The LEDs are positioned in two rows at the edge of the display, and thus the system is to be seen as an edge emitting system. The side emitting LEDs used are however monochrome white LEDs, so no colour mixing problems need to be handled.

For large-sized displays, where the brightness is an issue, "direct backlights" are used. The direct backlight systems comprise a large number of light sources that directly illuminate a diffuser plate. Typically, cold cathode fluorescent lamps (CCFLs) are used. Direct backlight systems feature higher brightness, higher efficiency and lower temperature increase. One disadvantage of the direct backlight system is the increased thickness of the system. Furthermore, direct backlight systems suffer from obtaining a good luminance uniformity. When differently coloured light sources are used in a direct backlight systems, a sufficient thickness of the system is even more important in order to obtain sufficient colour uniformity for the light output.

An example of a direct backlighting system using differently coloured LEDs as light sources is described by R.S. West et al in SID 03 Digest (2003) p 1262. The direct backlight system described comprises 2 rows of coloured light sources - red, green and blue high power LEDs - positioned in a 50 mm deep cavity. The thickness of the cavity having a reflective bottom and reflective sidewalls, combined with the use of a diffuser plate positioned more than 30 mm above the LED arrays, allows to obtain an acceptable colour uniformity. The height of the backlight is not less than 50mm as additional components, such as e.g. a diffuser plate, are necessary. Furthermore, the centre-to-centre distance of the high power LEDs is small, which may result in heating problems and limits the possibilities to further increase the brightness by providing more light sources. None of the above mentioned backlight systems using light sources having a different colour, allows obtaining a good colour mixing while still having a reasonable backlight thickness.

**Summary of the invention**

It is an object of the present invention to provide a method and system for illuminating, e.g. in display devices but also more generally in illumination applications, that combines good luminance and good colour uniformity with a limited thickness of the system even when light sources having different colours are used. The above objective is accomplished by a method and device according to the present invention.
The invention relates to an illumination system comprising a plurality of light sources and a light guiding means. The plurality of light sources comprises at least light sources emitting light of a first type and at least light sources emitting light of a second type, said first type differing from said second type. The light guiding means has a first surface, through which light is coupled out, and a second surface, opposite to said first surface, comprising a plurality of recesses having a top side directed towards the first surface and one or more side portions. According to the present invention said plurality of recesses and said plurality of light sources co-operate with each other such that said emitted light is coupled into the light guiding means substantially distributed over said second surface and is coupled into the light guiding means through said one or more side portions of said plurality of recesses and not through said top side. The light maybe coupled in into the light guiding means substantially parallel to said first surface of said light guiding means. The illumination system may comprise mixing means for mixing the light from the light sources emitting light of the first type and the light sources emitting light of the second type.
The illumination system may comprise a specially structured surface pattern provided in at least part of said first surface and/or of said second surface. The specially structured surface pattern may be a light out-coupling means. Alternatively, the illumination system may comprise a film comprising a specially structured surface pattern, said film being laminated on at least part of said first surface and/or of said second surface. The film comprising a specially structured surface pattern may be a light out-coupling means. The specially structured surface pattern may comprise at least one region wherein, for substantially each point of said at least one region, the angle between the local normal on the tangent plane in said point and the normal on the average plane through said structured surface pattern is less than 20° but larger than 0°, preferably between 5° and 10°. The specially structured surface pattern may furthermore comprise at least one region wherein, for substantially each point of said at least one region, the angle between the local normal on the tangent plane in said point and the normal on the average plane through said specially structured surface pattern is 0°. Of all regions deviating from being parallel with the average plane through said specially structured surface pattern, at least 90% have substantially only points wherein the angle between the local normal and the normal on the average plane through said structured surface pattern is between 20° and 5°, preferably at least 95%, even more preferably at least 99%. With the local normal in said point it is meant the local normal on the tangent plane through said point, which tangent plane is tangent to said specially structured surface. By "substantially each point of said at least one region", is meant at least 90% of the surface area of said at least one region, more preferably at least 95%, even more preferably at least 99%.
The light guiding means has a first refractive index and furthermore may comprise a plurality of small particles dispersed in the light guiding means, whereby the small particles have a second refractive index differing from said first refractive index. Generally a light difference is sufficient. The particles may provide a means for coupling out the light. The particles may provide a means for mixing the light. Alternatively or in combination thereto, the illumination system may comprise a film, laminated on at least part of said first surface and/or of said second surface, said film having a first refractive index and incorporating a plurality of small particles having a second refractive index differing from said first refractive index. Generally a slight difference is sufficient. The particles may provide a means for coupling out the light. The particles may provide a means for mixing the light. Slightly differing means having a difference between 0.2 and 0.03. The recesses may have a cylindrical shape or a conical or truncated conical shape having a top angle less than 20°, preferably less than 10°, more preferably less than 5°. The plurality of recesses are any of niches in said light guiding means having a top portion or holes in said light guiding means running through said light guiding means. Light blocking means may be provided in said plurality of recesses to prevent light being coupled out through the topside of said recesses. Light blocking means may be provided on said plurality of light sources to prevent light from being coupled out through the topside of said plurality of recesses.
Each of said plurality of light sources may be positioned at least partly in one of said plurality of recesses. Each of said plurality of light sources may be positioned in a separate recess. The plurality of light sources may be light emitting diodes. The light emitting diodes may be side-emitting light emitting diodes. The plurality of lights sources may comprise at least red emitting light sources, green emitting light sources and blue emitting light sources.
The light guiding means may be made of an optical clear material. The optical clear material may be polymethylmethacrylate (PMMA).
The illumination system may furthermore comprise anisotropic scattering means for improving mixing of light. The anisotropic scattering means may be in the form of cylindrical or conical holes or niches thereby improving mixing of the light. The anisotropic scattering means may be positioned between said recesses to prevent direct impingement of light on a neighbouring recess after light has been coupled in into said light guiding means through a first recess.

The illumination system may be used as backlight system in a display system. The display system may be a liquid crystal display system.

The invention furthermore relates to a method for illuminating using an illumination system comprising a plurality of light sources, including a first set of light sources emitting light of a first type and a second set of light sources emitting light of a second type, said first type differing from said second type, and a light guiding means having a first surface. The method comprises emitting light of a first type from said first set of light sources and emitting light of a second type from said second set of light sources, coupling in said light emitted from the light sources substantially parallel to said first surface of said light guiding means and distributed over said first surface and coupling out said light from said illumination system. The plurality of light sources may for example comprise a set of light sources emitting red light, a set of light sources emitting blue light and a set of light sources emitting green light. These sets may emit only red, only blue and only green light respectively. More generally, the plurality of light sources may comprise a set of light sources emitting a first colour, a set of light sources emitting a second, different colour and a set of light sources emitting a third colour different from both the first and the second colour.

Coupling out said light from said illumination system may be performed after deviating said light at least once in said light guiding means maximally over an angle less than 40°, 0° not being included, preferably maximally over an angle between 20° and 10° for each deviation.

The invention furthermore relates to an illumination system comprising a plurality of light sources for emitting light and a light guiding means having a first surface through which light is coupled out, said light guiding means being adapted for coupling in light from the light sources substantially parallel to said first surface. According to the present invention said light guiding means furthermore comprises a specially structured surface pattern, comprising at least one region wherein, for substantially each point of said at least one region, the angle between the local normal on the tangent plane in said point and the normal on the average plane through said structured surface pattern is less than 20° but larger than 0°, preferably between 5° and 10°.

The specially structured surface pattern may furthermore comprise at least one region wherein, for substantially each point of said at least one region, the angle between the local normal on the tangent plane in said point and the normal on the average plane through said specially structured surface pattern is 0°. Of all regions deviating from being parallel with the average plane through said specially structured surface pattern, at least 90% may have substantially only points wherein the angle between the local normal and the normal on the average plane through said structured surface pattern is between 20° and 5°, preferably at least 95%, even more preferably at least 99%.. By "substantially each point of said region" is meant at least 90% of the surface area of said structured surface pattern, more preferably at least 95%, even more preferably 99%. The specially structured surface pattern may comprise a plurality of facets. The specially structured surface pattern may be localised at least on part of said first surface and/or at least on part of an opposite side of the first surface with respect to the light guiding means.

The invention also relates to a method for illuminating using an illumination system comprising a plurality of light sources and a light guiding means having a first surface. The method comprises emitting light from said light sources, coupling in said light emitted from the light sources substantially parallel with said first surface of said light guiding means, reflecting at least once substantially all light coupled in thereby changing the angle of incidence of said light on said first surface over an angle less than 40° but larger than 0°, preferably over an angle between 20° and 10° for each reflection, and coupling out the light through the first surface after said at least one reflection.

The features, as described in the different dependent claims, can be, where appropriate, applied to the different aspects of the invention.

It is an advantage of the present invention that the illumination system is relatively slim and that it can be used for high brightness applications, including LCD television.

It is also an advantage of the present invention that the illumination system combines the use of light sources having different colours with good colour uniformity.

It is furthermore an advantage of the present invention that the illumination system can be scaled up easily, without substantially influencing the luminance and/or colour uniformity qualities.

It is an advantage of some embodiments of the present invention that no mercury is present in the system, which is preferable if the system is used in medical applications.

It is an advantage of the present invention that systems can be obtained having an efficiency close to the direct backlight systems of the prior art.

The teachings of the present invention permit the design of improved methods and apparatus for providing backlight illumination in a non-emissive display system.

These and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

Fig. 1 shows a schematic cross-section of an illumination system having a topside imprinted light guiding means according to a first embodiment of the present invention.

Fig. 2 shows a more detailed schematic cross-section of an illumination system having a topside imprinted light guiding means according to the first embodiment of the present invention and using side emitting LEDs as light sources.

Fig. 3 shows a schematic illustration of adjustments for the use of a standard LED for sideways illumination as can be used in the first embodiment of the present invention.

Fig. 4a shows an enlarged view of a cross-section of the imprints on a side of the light guiding means of the illumination system according to embodiments of the present invention.

Fig. 4b shows an elevated top view of a structured pattern on a side of the light guiding means of the illumination system according to embodiments of the present invention, where tiny pyramids are used as structures with their tops pointing away from the light guide.

Fig. 4c shows an elevated top view of an alternative structured pattern on a side of the light guiding means of the illumination system according to embodiments of the present invention, where tiny pyramids are used as structures with their tops pointing towards the light guide.

Fig. 5 shows a schematic cross-section of an alternative design having a bottom side imprinted light guiding means for an illumination system according to another example of the first embodiment of the present invention.

Fig. 6 shows a schematic cross-section of an alternative design having a specially structured surface pattern incorporated in a film laminated on the light guiding means according to another example of the first embodiment of the present invention.

Fig. 7a - Fig. 7c show different examples of illumination systems using different coloured light sources whereby different types of mixing means are illustrated, according to a second embodiment of the present invention.

Fig. 8 shows a schematic representation of a cross-section of a non-emissive display with a hybrid backlight system according to a third embodiment of the present invention.

In the different figures, the same reference signs refer to the same or analogous elements.

**Description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Moreover, the terms top, bottom, horizontal, vertical and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

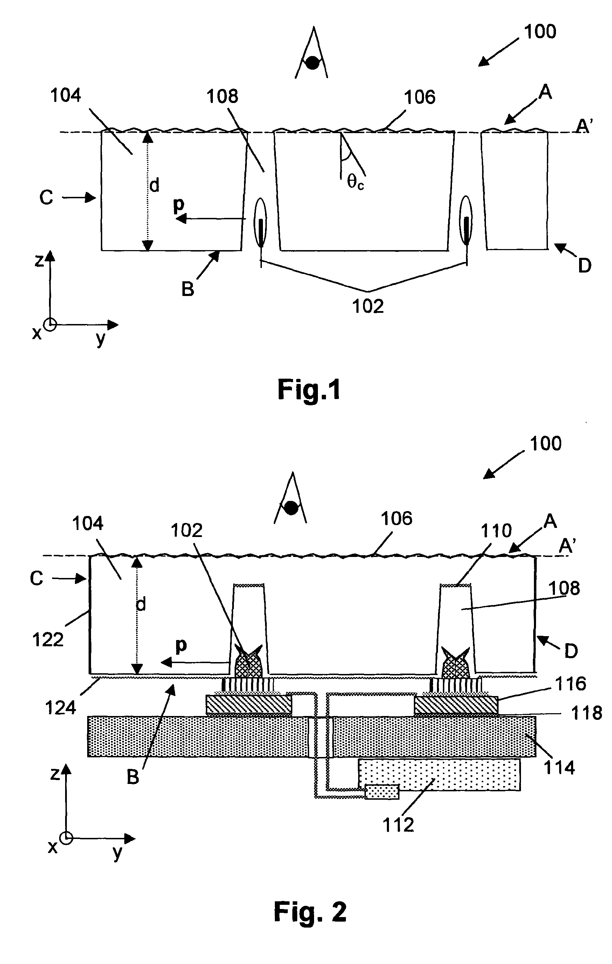

In a first embodiment, the invention relates to a method and system for illuminating, the illumination system comprising a number of light sources and a light guiding means. A schematic overview of a corresponding system is shown in Fig. 1. The illumination system 100 shows a number of light sources 102 and a light guiding means 104 having a specially structured surface pattern 106, by way of example illustrated in Fig. 1 as geometrical features at the light out-coupling side A of the light guiding means 104. The invention is especially suited for a number of light sources 102 having different colours, as it allows to obtain good colour mixing, but the invention is not limited thereto. The light guiding means 104 has a light out-coupling side A, also referred to as illumination side or viewing side, through which light is coupled out, a back side B, positioned opposite to the light out-coupling side A, and edge sides C to F (E and F are not shown in Fig. 1 as they are positioned in front of and behind the plane of the drawing respectively). For convenience of explanation, a reference x,y,z co-ordinate system is defined, whereby light out-coupling side A and back side B are substantially oriented parallel with the x, y plane, also referred to as the horizontal direction, whereas edge sides C and D are substantially oriented along x,z planes and edge sides E and F (not shown in Fig. 1) are substantially oriented parallel with the y-z plane, both referred to as vertical direction. Depending on the specific application the illumination system 100 is used in, the light out-coupling side A and back side B may be a large out-coupling area, e.g. if the illumination system 100 is used for advertising or as a backlight in a large non-emissive display system. It is an advantage of the present invention that the thickness d of the light guiding means 104, i.e. the average distance between light out-coupling side A and back side B in the z-direction, can be limited to 20 mm or less, preferably is between 5 and 15 mm. This is a significant decrease in thickness compared to the light guiding means used in direct backlight systems, especially for direct backlight systems using different coloured light sources as these require a thickness of 50 mm to obtain sufficient colour mixing.

The light sources 102 are basically distributed over the entire light guiding means 104. In other words the positions where light is coupled in into the light guiding means 104 are distributed over the x,y plane, like in a direct backlighting system, and light in-coupling is not obtained through the edge sides C to F of the light guiding means 104, contrary to an edge emitting backlight system. In order to obtain a good colour and intensity uniformity combined with a limited thickness d of the light guiding means 104, the present invention combines the use of a specially structured surface pattern 106 with a specific way of in-coupling of the light, i.e. such that the light initially propagates in the light guiding means 104 in directions substantially parallel with the light out-coupling surface A, more specifically, with the reference plane A', being the mathematical plane that fits best with the out-coupling surface A. This reference plane A', which does not have the structured surface, is, by way of illustration, shown parallel with the x,y plane. It is to be noted that for the ease of explanation a non-curved backlight system is described, although the invention is not limited thereto. In a curved backlight system, the role of the reference plane would be taken over by a reference surface, following the main curvature of the light out-coupling surface A, but not following the specially structured surface pattern.

In other words, the in-coupling of the light is such that it initially propagates in the light guiding means 104 substantially parallel with the x,y plane as indicated by arrow p in Fig. 1. With substantially parallel it is meant that at least 70%, preferably at least 80%, more preferably at least 90% of the light rays make an angle of 30° or smaller with the x,y plane, immediately after they have been coupled in into the material of the light guiding means. The distribution of the angles of those in-coupled light rays is determined by the angular emission characteristic of the light sources 102 in air, the inclination angle of the side portions of the recesses 108 (see below) through which the light is coupled in and the refractive index of the material the light guiding means 104 is made from. When the side portions of the recesses 108 are vertical or almost vertical, as e.g. in Fig 1, refraction on the air-material interface will decrease the angle of the in-coupled light rays. A larger index of refraction of the light guide material will result in smaller angles. Using cylindrically shaped recesses will result in smaller angles than using conically shaped recesses, and well-polished or smooth side portions will also result in a smaller angular distribution than rough or unpolished side portions of the recesses. The use of side emitting light sources having a small angular horizontal emission pattern is most favourable to obtain small angles of the in-coupled light rays. A more detailed description of the different components and their characteristics will be described with reference to Fig. 1 to Fig. 6.

The light guiding means 104 is made of an optically clear material, such as e.g. a glass or a plastic such as polymethylmethacrylate (PMMA), polycarbonate, polyester, optically clear copolymers or flame resistant plastics. In principle, any optically clear material which has a significant low optical absorption coefficient for the wavelengths of the light that are to be coupled out will do. The low optical absorption coefficient is preferred because on average, in the present invention, the light rays will travel quite a long distance through the light guiding means 104 before they will be coupled out. Because of the geometrical features of the specially structured surface pattern 106 which are part of the light guiding means 104, the light guiding means 104 preferably are made of a material that can be made by moulding, e.g. by compression moulding. Moulding allows high volume and low cost production. Furthermore, using moulding, different optical functions, such as e.g. optical functions needed to use the illumination system 100 as a backlight system in non-emissive displays, can be easily integrated. Other ways for constructing a light guiding means 104 according to the present invention may be e.g. profiling a plate of material by drilling and milling or composing it as a stack of a plurality of plates and/or sheets with the correct shape and optically coupling these plates and/or sheets, e.g. with UV curing glue or optical gel or pressure sensitive adhesive. The specially structured surface pattern 106, e.g. shallow imprints, could then e.g. be applied on the top sheet, while the holes or niches could be applied on the bottom plate in the z-direction, top and bottom elements possibly being obtained by using different manufacturing techniques. Intermediate plates or sheets may be present between the top plate and the bottom plates. Alternatively, the specially structured surface pattern 106 may be provided by applying a film having such a structure on the light guiding means 104. Such a film may be made by imprinting a pattern on a flat film. The film may be provided in any suitable way, such as e.g. by sticking it to a surface of the light guiding means 104. The film may be obtained with a layer of pressure sensitive adhesive, such that it can be easily applied to the surface of the light guiding means. The film typically is relatively thin, e.g. around 0.25 mm, and flexible. Depending on the application wherein the illumination system 100 will be used, the material of the light guiding means 104 could also be chosen such that it has a certain degree of flexibility, e.g. if it is to be used as a backlight system for flexible displays. The presence of the specific specially structured surface pattern 106, allows that the thickness d of the light guiding means 104, i.e. its dimension in the z-direction which is the direction of light out-coupling, or thus the direction perpendicular to the plane of light out-coupling A, can be limited to less than 20 mm, preferably less than 15 mm thickness, while still having good colour mixing, luminance uniformity and efficiency. With good colour mixing is meant that the difference in colour co-ordinates $\Delta x$ and $\Delta y$ for the light emitted at different positions on the light out-coupling surface is less than 0.010, preferably less than 0.005, more preferably less than 0.002. Thereby reference is made to the x,y CIE colour co-ordinates in the CIE 1976 U.C.S. Chromaticity Diagram, as defined by the "Commission Internationale de l'Eclairage" (CIE) in 1976. With good luminance uniformity it is meant that the ratio $L_{min} / L_{max}$ is larger than 0.75, preferably larger than 0.85, more preferably larger than 0.92. With a good efficiency is meant that the optical efficiency should be larger than 75%, preferably larger than 85%.

In the present embodiment, total internal reflection (TIR) is used to keep the light longer in the light guiding means 104, thus obtaining an improved luminance uniformity and an improved colour uniformity, if light sources with different colours are used in the backlight system. Total internal reflection will happen at both surfaces A and B, when the angle of incidence exceeds the critical angle $\theta_c$, determined by

$$\theta_c = \mathrm{Arc}\sin\left(\frac{n_e}{n_l}\right) \text{ with } n_e \text{ the index of refraction}$$

of the surrounding material, e.g. $n_e = 1$ in case of air, and $n_l$ the refractive index of the material from which the light guiding means 104 is made.

To obtain optimum conditions for total internal reflection, the index of refraction $n_l$ of the light guiding means 104 material should be larger than $\sqrt{2}.n_e$. In that case, the condition for total internal reflection is always met for all light rays that are coupled into the light guide from recesses 108, i.e. holes or niches, having vertical side portions, hitting the upper and lower surfaces A and B if those surfaces would be perfectly flat. As these conditions in general are not met for the side facets C, D, E or F, typically reflecting means are provided on those side facets to keep the light in the light guide. The reflecting means can e.g. be a piece of specular reflecting foil. The latter prevents loss of light at the facets C, D, E or F and thus allows to achieve a high optical efficiency. The larger the index of refraction $n_l$ of the light guiding means 104 compared to the index of refraction $n_e$ of the environment, the lower the critical angle $\theta_c$ above which total internal reflection is obtained and therefore the easier it is to obtain total internal reflection. Good conditions are obtained for most optical clear materials, which nearly all have a refractive index close to 1.5.

The specially structured surface pattern 106, which defines the light out-coupling surface A and/or the bottom surface B, however, is not perfectly flat and when a light ray hits that surface, the vertical component of its propagation vector will be altered a little bit. The resulting effect will be that the incident angle of a light ray will gradually increase with each hit on the structured surface, but never more than twice the inclination angle that the local normal on the structured surface makes with the normal on the reference plane, until the condition for total internal reflection is no longer met. If the condition for total internal reflection is no longer met, the light will be coupled out of the light guide 104 either on the A or B side. Light out-coupling can only happen after the ray has travelled over a significant path length in the light guide 104 so that it has been subject to several hits with A. There is almost as much chance that the ray will escape on the bottom side as on the top side, so that a film 124 having good reflection properties must be placed under the bottom plane B if only light out-coupling through light out-coupling surface A is to be achieved with a good optical efficiency.

The light sources 102 used in the present invention may be any type of light sources that are sufficiently small so that they allow to obtain a thin - preferably limited to a few centimetre - illumination system 100. The illumination system 100 is adjusted such that the light of the light sources 102 is coupled in the light guiding means 104 substantially horizontally, i.e. substantially parallel with the light out-coupling side A, or more specifically, with the reference plane A'. Furthermore, the light is coupled in spread over the x,y plane or in other words, distributed over the illumination side A of the illumination system 100. This distribution may be substantially uniform or homogenous over the illuminating area of the illumination system 100. To achieve this, recesses, i.e. holes or niches 108, are provided in the light guiding means 104, into or under which light sources 102 are provided, and through which the light can be coupled in substantially horizontally into the light guiding means 104. Depending on the light sources 102 used, the light sources 102 can be positioned immediately in the holes or niches 108, or they can be positioned under the holes or niches 108 and the light can be directed to and in these holes or niches 108. It is preferred to use light sources 102 that can be positioned in the holes or niches 108 such that less space is lost. Both conventional, non side-emitting light sources such as cold cathode fluorescence light sources and conventional light emitting diodes and less conventional, side-emitting light sources, such as side-emitting light emitting diodes can be used. The shape of the holes or niches 108 in the light guiding means 104 may be adjusted to the shape of the light sources used, e.g. long-shaped cavities may be provided for long-shaped cold cathode fluorescence light sources to fit in. The use of side-emitting light sources is advantageous to obtain easier horizontal light in-coupling. The present embodiment can be used both with white emitting light sources and with light sources emitting coloured light. The advantageous colour mixing properties of the present embodiment is especially useful for use with coloured light sources emitting at least two different colours of light.

If conventional, non side-emitting light sources having a more uniform emission characteristic are used, such as e.g. cold cathode fluorescence light sources (CCFLs) and conventional light emitting diodes (LEDs), the emission characteristic can be altered, i.e. for example flattened, by further adjusting the light guiding means 104 or the light sources 102, for example by introducing a redirection means, such that light that is emitted towards the top of the holes or niches 108 is redirected, preferably such that the light is redirected to be coupled in horizontally into the light guiding means 104. By doing this, it is prevented that light rays that propagate substantially perpendicular to the reference plane A', couple in into the light guiding means 104 at the top of the niche 108 and go straight through the light guiding means 104 or travel through the hole in the light guiding means 104, to be directly emitted from the light out-coupling side A. This can be prevented by placing a light blocking means 110 near the top surface of the holes or niches 108, as e.g. shown in Fig. 2. The light blocking means 110 may be part of the light source 102 or may be connected, i.e. fixed such as glued or deposited e.g. by CVD, to the light guiding means 104. If holes 108 are used, the light blocking means may e.g. be solid pieces that can be fixed in the holes, e.g. based on their shape which for example may be tapered.

The light blocking means 110 can be either reflecting or absorbing, but preferably are made of a reflecting material so that light that hits it will not be lost by absorption, but is recycled. If the light blocking means 110 is connected to the top of the niche 108, the reflectance should, at the side of the light guiding means 104, preferably be specular in order to still satisfy the condition of TIR for light that reflects in the light guiding means 104 on this light blocking means, thus avoiding a clear spot above the niche 108.

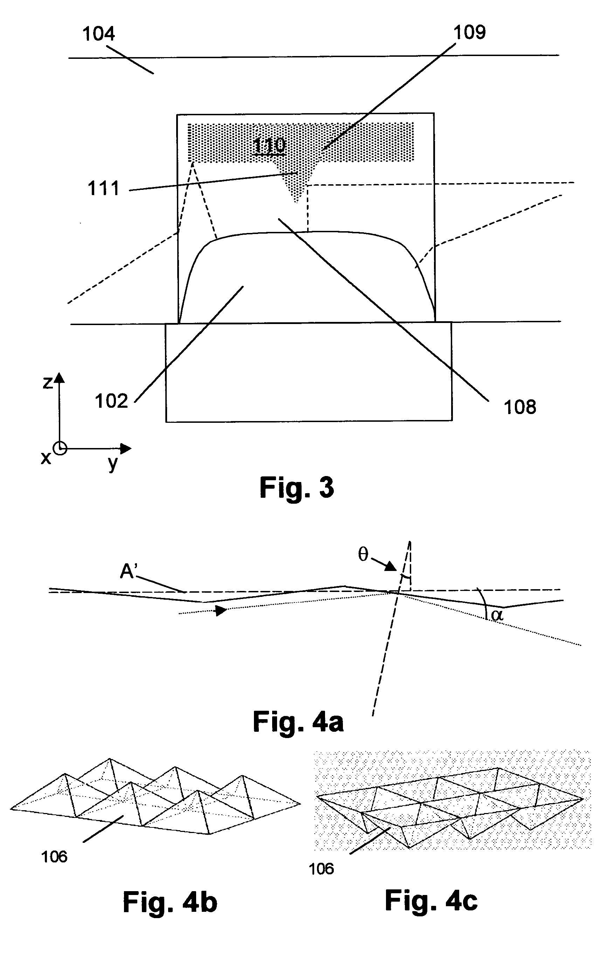

When using conventional light sources that emit with a Lambertian characteristic, preferably a specially designed light blocking means 110 is used that redirects at least part of the light in a better-suited direction. An example of such a light blocking means 110 is shown in Fig. 3, where the light blocking means 110 comprises a substantially flat sheet 109 of light blocking material with a substantially conical tip 111 substantially in the centre thereof, pointing towards the open end of the niche 108. The exact shape of the substantially conical tip 111 may be adapted to the exact emission characteristics of the light source 102. Fig. 3 also illustrates the optical path of different light rays emanating from the light source 102 that emits with a Lambertian characteristic. The light emitted to the top side, i.e. towards the light out-coupling side A, hits the conical tip 111 and is redirected to enter the light guiding means 104 substantially parallel to the x,y plane. Alternative designs, e.g. using differently shaped mirrors, can be easily found by a person skilled in the art.

In the present invention, the light thus is coupled in substantially horizontally into the light guiding means 104 and light sources 102 are distributed over substantially the whole illumination surface of the light guiding means 104. The principle of distributing the light sources 102 all over the surface has many advantages. It allows to easily increase the total number of light sources 102, e.g. compared to edge-emitting systems, and thus to increase the brightness that can be obtained. It furthermore allows to increase the luminance uniformity of the illumination system 100, especially for large illumination systems. Alternatively, a same number of light sources 102 can be used, and they can be placed further apart, making the transport of the generated heat easier, thus resulting in a lower LED chip temperature. A lower LED temperature results in a longer lifetime and a higher efficiency. According to still another example, an intermediate number of light sources 102 can be used, i.e. more light sources 102 than would be used in a side-emitting configuration, so as to obtain a higher brightness.

By way of example, a comparison can be made with known prior art systems, such as e.g. edge-lit and direct backlight illumination systems from Lumileds Lighting Company, California, USA. Whereas the distance between neighbouring LEDs (e.g. high power LEDs having a power of 1W each) in the present invention may e.g. be 4 cm to obtain a pre-defined output power, the distance in metal core printed circuit board edge-lit and direct backlight illumination systems from Lumileds Lighting Company needs to be typically 9 mm. Another advantage, compared with illumination for edge-lit systems is that no small entrance side is present, and consequently not a lot of additional optical means are needed to couple the light into the light guiding means 104. Therefore, the optical efficiency of the system according to the present invention is larger than for edge-lit type illumination systems. It thus is an advantage of the present invention that less optical constraints are to be taken into account than in the case of the edge-lit light guiding means of the prior art. Another advantage of distributing the light injection uniformly over the surface as in embodiments of the present invention is that the specially structured surface pattern 106, used for keeping the light sufficiently long in the light guiding means 104 to obtain a good colour mix and a good luminance uniformity, can be made completely uniform over the entire light guiding means 104 of the illumination system 100, as opposed to e.g. a pattern of painted dots on edge-lit illumination systems. This makes it easier and in general cheaper to construct a corresponding specially structured surface pattern 106 according to the present invention.

The specially structured surface pattern 106, which is or forms part of the light guiding means 104, is such that the size of the vertical component of the propagation vector of light incident thereon changes only slightly and in a controlled way. It is a specific advantage of the specially structured surface pattern 106 that the change is obtained in a controlled way. Every reflection at the specially structured surface pattern changes the angle of incidence with respect to the reference plane A' only over a limited angle, i.e. over less than 40°, but more than 0°, preferably over a limited angle between 20° and 10° and this for more than 90% of the incident light rays, preferably more than 95%, even more preferably more than 99% of the incident light rays. This implies that the majority of light rays originating from any light source 102 must travel at least a considerable distance through the light guiding means 104 before it can be coupled out, as originally, the light is coupled in substantially parallel to the reference plane A'. When this condition holds, the light will be mixed well. In the present embodiment (see Fig. 2), the specially structured surface pattern 106 is provided by shallow geometric features, also referred to as shallow imprints, on at least one of the two large surfaces of the light guiding means, i.e. the light out-coupling surface A and/or the back surface B opposite thereto. The shallow imprints can either cover the whole of any of those surfaces or only part of it. Application of these shallow geometric features means that the light out-coupling surface A and/or the back surface B is no longer flat and thus is not situated in a single plane. With respect to a reference plane A', i.e. a plane parallel with the x,y plane which corresponds with the average orientation of the surface carrying the specially structured surface pattern 106, the shallow geometrical features are such that the corresponding local planes, which may be surfaces of a multi-facetted specially structured surface or tangent planes in points of a slightly waving specially structured surface, have a local normal which only includes a small angle θ with the normal to reference plane A', i.e. with the average normal, as illustrated in Fig. 4a. It is thereby important that the angle between the local normals on the surface carrying the specially structured surface pattern 106 and the average normal on the reference plane A' is sufficiently small for most points of the specially structured surface pattern 106. With sufficiently small is meant that the angle θ is not larger than 20°, but larger than 0° such as e.g. not less than 3°, preferably between 10° and 5°. When a light ray hits a point on the surface of the light guiding means 104 where an imprint is present, it will be reflected, i.e. the reflected ray will include an angle α with the reference plane A' which is different from the angle the incident ray includes with the reference plane A'. The incident ray will be reflected under an angle that differs from the hypothetical ray that would be reflected on the flat reference plane A' by less than two times the angle between local normal and normal on the reference plane. In other words, redirecting in the direction perpendicular to the reference plane A' is limited, such that the angle of incidence referred to the reference plane A' changes over less than 40° for the majority of light rays, but more than 0°, preferably over a maximum angle between 20° and 10°. Most light that is incident on said specially structured surface pattern 106 is scattered vertically over an angle within this range. The change of the angle of incidence of an impinging light ray is determined as the difference between the angle of incidence with reference to the reference plane A' before reflection, and the angle of the reflected light ray with reference to reference plane A'. The small change in angle of incidence leads to the necessity of a number of hits with the specially structured surface pattern 106, before an initially nearly or substantially horizontal light ray is not in total internal reflection regime anymore and thus before it can be coupled out. The specific geometrical features may have any shape that fulfils the small change of angle of incidence condition such as, but not limited to, e.g. a smooth curvature, pyramidal structures or conical structures with a wide top angle, etc. In Fig. 4a, by way of illustration and not to scale, a cross-section of a particular realisation is shown whereby the light out-coupling surface A is covered with pyramidal shaped imprints. The angle θ that the normal on each triangular facet of a pyramid makes with the normal on the reference plane A' is typically 8°. The angle of incidence of any light ray striking the upper surface will then change over an angle of at most 16°. The distance between neighbouring pyramid tops, also referred to as the pitch, should be kept small so that the structure cannot be perceived outside the illumination system. Typically, a pitch between 5 mm and 10 μm, preferably between 2 mm and 50 μm, more preferably between 500 μm and 50 μm will do. A more detailed picture of the specially structured surface pattern 106 showing pyramids is shown in Fig. 4b and Fig. 4c, showing two possible configurations. Fig. 4b shows a specially structured surface pattern 106 having pyramids with their top pointing outwards the light guiding means 104, Fig. 4c shows a specially structured surface pattern 406 having pyramids with their top pointing towards the light guiding means 104. The latter has the advantage that the tops of the pyramids are better protected against damage.

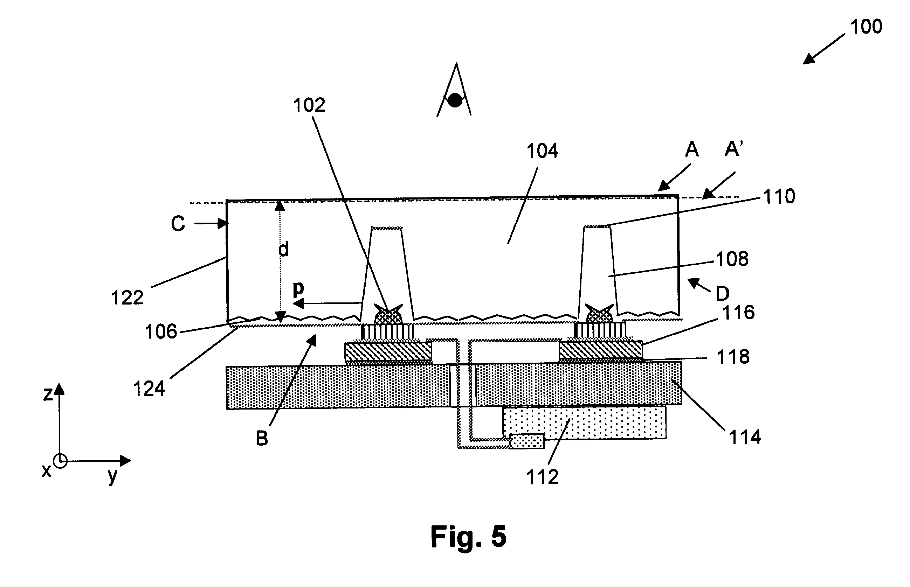

In Fig. 5, an alternative example is shown, whereby the specially structured surface pattern 106 is provided at the back side B opposite to the light out-coupling side A with respect to the light guiding means 104, and whereby the specially structured surface pattern 106 is provided in between the holes or niches 108 through which the light is coupled in into the light guiding means 104. In this example, shown in Fig. 5, the light is scattered by the specially structured surface pattern 106 at the back side B and the light is either coupled out or totally internally reflected at the light out-coupling side A, dependent on its angle of incidence on the light out-coupling side A. The angle of incidence on the light out-coupling side A will only be outside the TIR condition after the initially substantially horizontally coupled in light rays nearly all have interacted at least two or three times with the specially structured surface pattern 106. The surface of the light out-coupling side A in this case may be flat. Alternatively, combination of a specially structured surface pattern 106 at out-coupling side A and at backside B may be used.

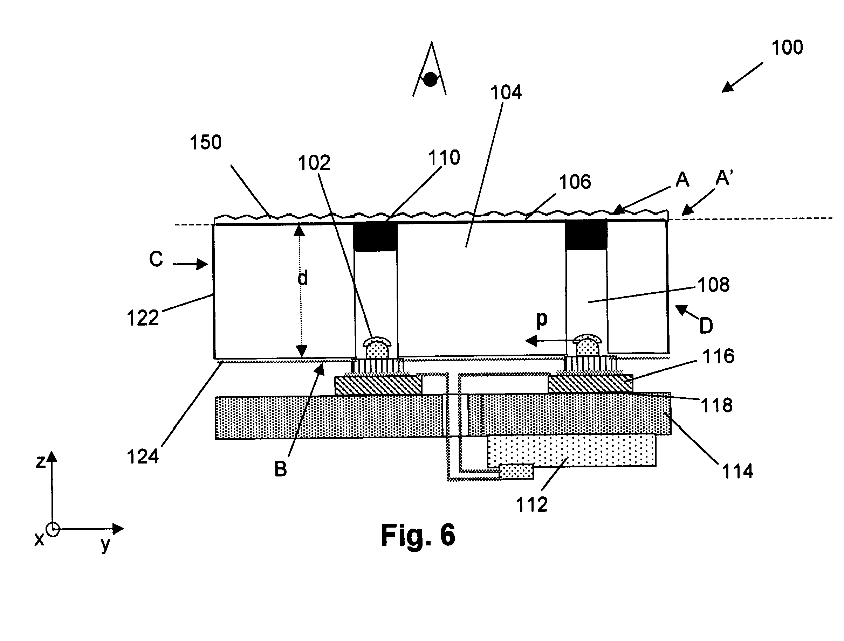

An example of an illumination system 100 having a specially structured surface pattern 106 incorporated in a film 150 and laminated on top of the light guiding means 104 is shown in Fig. 6.

The specially structured surface pattern 106 of the present invention thus allows to redirect the light incident with a substantially large angle of incidence back into the light guiding means 104 and to only couple the light out of the structure if the angle of incidence on the light out-coupling side A is small enough. The light thus is captured for a significant time in the light guiding means 104. It is an advantage of the present invention that the specially structured surface pattern 106 has no Lambertian scattering characteristic to couple the light out. Typical examples of such Lambertian scattering features, as known from the prior art, are white painted dots or scratches over the surface or diffusing particles in the light guiding means material. In those realizations, some light rays will be coupled out from the light guiding means, independent of the angle of incidence, and thus some light rays will be coupled out very close to the source from which they originate, which has a negative influence on luminance and colour homogeneity.

Besides the above-mentioned features, the illumination system 100 also may comprise other parts and features, known by a person skilled in the art. The system may e.g. comprise (see Fig. 2, Fig. 6, Figs. 7a to 7c) a driving means 112 for driving the light sources 102. Heating problems may be prevented by applying a heat sink 114 e.g. connected to a light source carrier 116. This carrier 116 may be e.g. a piece of interconnection substrate, such as e.g. a printed circuit board. It may be a metal core printed circuit board (MCPCB) on which the LEDs are soldered or glued.

The illumination system 100 furthermore may be equipped with optional additional means to improve the efficiency of the system. If a good efficiency is to be achieved, the four edges C to F of the light guiding means 104, i.e. the edges shown parallel with the x-z and y-z planes, must be covered with a very efficient reflecting film 122 with the reflecting surface as close as possible to the edges C to F to minimise light leakages. Such a film may e.g. be a reflecting dielectric film glued onto the light guiding means 104 with a pressure sensitive adhesive. The reflecting film preferably is a specular reflecting film, as the latter supports uniformity of the light spreading.

At the back side B of the light guiding means 104 also a reflecting film 124, preferably a white diffuse reflecting film, may be applied to prevent loss of light due to out-coupling through the backside B, as illustrated in Figs. 2 and 5, if a good efficiency is to be achieved. In this way, light is recycled or as much as possible prevented to get lost.

Depending on the application, variations in thickness and steepness of the surface imprints lead to a change in optical efficiency in different realisations of the invention.

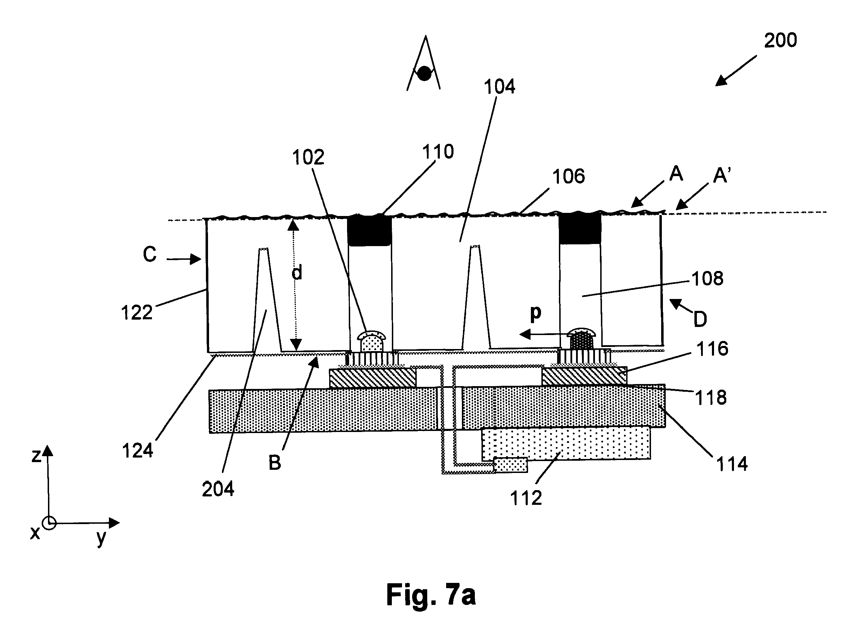

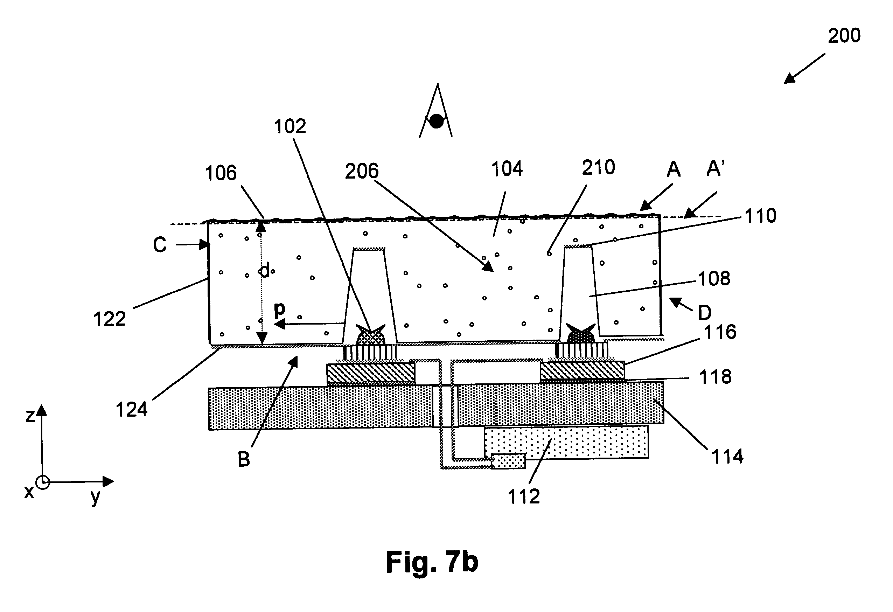

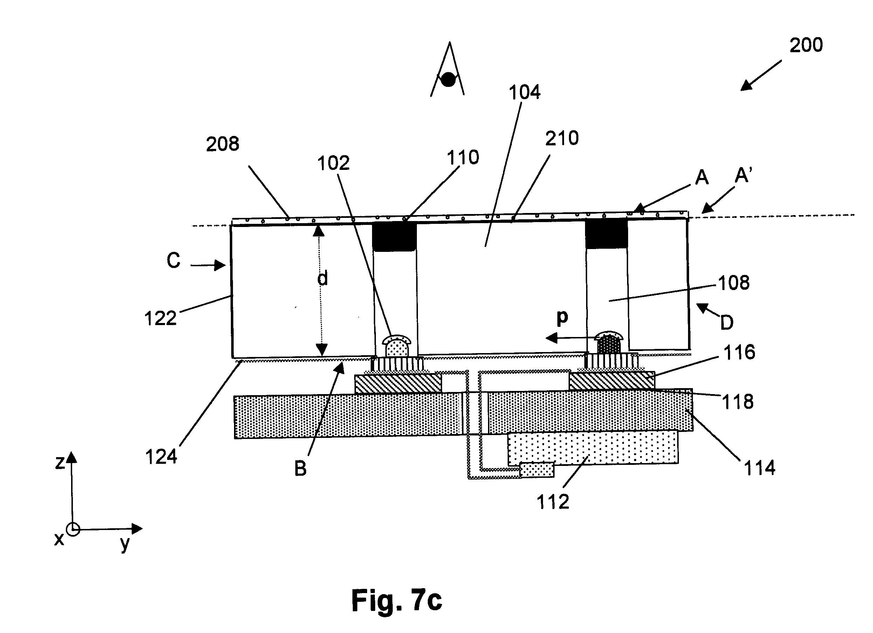

In a second embodiment, the present invention relates to an illumination system 200 similar to the illumination system as described in the first embodiment, whereby light is coupled in into the light guiding means 104 from a number of light sources 102 whereby at least two light sources emit a different colour of light, i.e. whereby at least two light sources emit at different wavelengths or in different wavelength regions, as illustrated in Fig. 7a to 7c. The light guiding means 104 may be constructed in a similar way as the light guiding means 104 described in the first embodiment, comprising similar features such as recesses 108, light blocking means 110 at the out-coupling side of the recesses 108, specular reflecting films 122 at the vertical sidewalls of the light guiding means 104, and a - preferably diffuse - reflecting film 124 at the backside of the light guiding means 104. The light guiding means 104 furthermore may comprise light mixing means for mixing light of light sources 102 emitting different coloured light. These mixing means may be anisotropic scattering means, e.g. conical diffusers 204 (Fig. 7a), diffuser means 206 (Fig. 7b) incorporated in the light guiding means 104 or a diffuser sheet 208 (Fig. 7c) , as will be described in more detail further.

In the present invention, the light is coupled in into the light guiding means 104 substantially horizontally, i.e. substantially parallel with the plane of the light guiding means 104 through which the light is coupled out. Therefore, the light sources 102, the light guiding means 104 or a combination thereof is adjusted, as described in the first embodiment of the present invention. The light furthermore is coupled in distributed over the light guiding means 104, i.e. comparable to direct backlighting systems and in contrast with edge-lit backlighting systems. The light sources 102 used typically are light sources that are sufficiently small to be provided close to recesses 108 in the light guiding means 104, such as e.g. niches or holes, or more preferably in the recesses 108, e.g. niches or holes, in the light guiding means 104. Typical examples of such light sources 102 are fluorescent light sources, conventional LEDs, high power LEDs or side emitting LEDs emitting different colours. The invention is particularly well suited for using LEDs having different colours. The use of monochrome LEDs of different types, i.e. each having a different colour, as light sources 102, is advantageous as highly saturated coloured red, green and blue LEDs can be used, such that colour tuning and/or an improved colour gamut can be obtained for the ultimate display. From the different types of LEDs available, high-power LEDs are often preferred, as these allow to obtain a higher brightness. High-power LEDs have a larger efficiency and power than conventional LEDs. Such LEDs are e.g. available from Lumileds Lighting Company, California, USA. Another advantage is that the current conventionally used for driving these high-power LEDs is much larger than 20 mA, which allows to use switched mode based electronic LED drivers instead of conventional dissipative linear driver ICs, thus further increasing the efficiency. If the different light sources 102, or the differently coloured light sources are driven with a separate driver, it is possible to tune the colour temperature of the backlight system, such that a preferred colour can be selected to be displayed. This advantage may e.g. be used in lighting applications. Typically red, green and blue light sources, such as e.g. red, green and blue LEDs are combined, such that a full colour illumination system with a wide colour gamut can be obtained. Preferably, side-emitting high power LEDs are used, which are e.g. obtainable from Lumileds Lighting Company, California, USA. These side-emitting LEDs are designed to emit very little light in a first, e.g. vertical direction, but almost all of their energy in second directions, e.g. in a horizontal plane. The fact that the light is emitted within a relatively narrow opening angle around a plane parallel to the reference plane A', i.e. e.g. horizontal direction, or according to the convention used in the present document the x,y-direction, is used in the present invention to prevent light to couple out quickly or too soon. The side-emitting LEDs can be positioned in the recesses 108 of the light guiding means 104, such that no additional thickness of the illumination system 100, 200 is created by the LEDs themselves, as would be the case when light sources 102 would be located underneath the light guiding means 104. Furthermore, depending on the quality of the side-emitting LEDs, i.e. on its characteristics with respect to directionality of light emission, the blocking means 110 can possibly be avoided. Preferably each recess 108 comprises at least one light source 102, although also a plurality of light sources 102 may be provided in one recess 108 (situation not represented in the drawings). The walls of the recesses 108, i.e. the niches or holes, in the light guiding means 104, through which the light is coupled in into the light guiding means 104 are preferably made almost vertical, i.e. substantially perpendicular to the reference plane A', so that the vertical component of the propagation vector of the light rays, which determines whether the condition for TIR is met, will not change much if reflection or scattering occurs at these surfaces. The scattering thus basically will only happen in the horizontal direction, i.e. in the direction of the x,y-plane. However, because the holes or niches 108 can scatter the light in a horizontal direction, i.e. parallel with the x,y plane, over very large angles, the niches and/or holes 108 substantially help to improve the light mixing. Although the scattering in the vertical direction is kept limited, the niches or holes 108 may have surfaces with an orientation slightly different from perpendicular to the x,y plane, such that light that is emitted exactly in the horizontal direction is redirected in the vertical direction at least a little bit. The shape of the niches or holes 108 may e.g. be slightly conical, corresponding with a cone having a top angle of less than 20° preferably less than 10°, more preferably less than 5°, instead of cylindrical. Otherwise, light rays which initially propagate in the light guiding means 104 exactly horizontally and whereby no scattering occurs in the vertical direction at all, would never hit the light out-coupling surface A. By making the niches or holes 108 slightly conical, the steepness of a light ray that was originally propagating almost horizontally increases slowly during every re-direction event, so that it will eventually hit the light out-coupling surface A under an angle of incidence smaller than the critical angle $\theta_c$ and thus can be coupled out. The steepness of the light ray thereby is defined as the complement of the angle of incidence of the light ray with respect to the light out-coupling surface A. It is to be noted that during light in-coupling the direction of the light may be changed due to refraction of the light when it enters the light guiding means 104. The holes or niches 108 could be made in the light guiding means 104 in any suitable way such as using a laser or using compression moulding, or by drilling or milling. The latter is suitable for prototypes or small volumes, whereas moulding is especially useful for generating larger volumes. In order to obtain conical niches or holes 108, a mould must be adapted to the high aspect ratio of the niches or holes 108, i.e. there will be a lower limit on the top angle of conical niches or holes 108 to allow for de-moulding. The diameter of the niches or holes 108 should at each position be a little bit larger than the corresponding diameter of the light source 102 to allow for thermal expansion. Recesses 108 under the form of holes or niches can be seen in the drawings.

Light out-coupling means may be provided, to eventually couple the light out of the light guiding means 104. These light out-coupling means may e.g. be a specially structured surface 106 - as described in the first embodiment - applied on the top surface A or the bottom surface B in combination with the mixing means. The former controls the light out-coupling such that the mixing of the light is not compromised too much. Alternatively, if the light out-coupling means would not be provided, the mixing means, such as e.g. conical diffusers 204, might change the direction of the light rays in the light guiding means 104 such that eventually the light rays are not in total internal reflection condition anymore.

As already mentioned, the mixing means may comprise anisotropic scattering means, such as conical diffusers 204 or diffuser means 206 embedded in the light guiding means 104. The anisotropic scattering means are typically positioned in between the locations where light is coupled in into the light guiding means 104 from light sources 102, as shown in Figs. 7a and 7b. These anisotropic scattering means diffuse the incident light such that only a small change in the vertical component of the propagation vector of the light rays occurs, whereas the change in the component of the propagation vector in the x,y plane, i.e. horizontal plane, can be much larger. The anisotropic scattering means thus are adapted to reflect the light substantially in the horizontal direction, but to substantially limit the amount of change to the angle of incidence with respect to the light out-coupling surface A or a best fitted mathematical reference plane thereof. With "substantially limit the amount of change in the angle of incidence" is meant that reflecting/scattering the light by the anisotropic scattering means creates a change of the angle of incidence, with less than 40° but more than 0°, preferably between 20° and 10°. The anisotropic scattering means may have any suitable shape. It may e.g. be a plurality of conical holes or niches 204 in the light guiding means 104. A reflecting or diffusing coating may be applied on the inside of those means. The diameter of the conical light diffusers 204 can then e.g. be typically half the diameter of the light source recesses 108. Depending on the particular realization and the diameter of the top surface of the anisotropic scattering means 204, this top surface can or cannot be covered with a reflecting material. The reflecting material may be a dielectric reflecting film or a metal reflecting film or a Lambertian reflector. The exact nature of the reflection characteristics of this material should be chosen in such a way as to optimise the uniformity of the luminance over the entire light guiding surface. The anisotropic scattering means 204 must preferably be placed between the light source niches or holes 108 so that light originating from one light source 102 cannot hit its immediate neighbouring light source niches or holes 108. In this way, the light efficiency is improved, as otherwise there is a high chance for loss of light when the light emitted from one light source 102 penetrates into a neighbouring light source niche or hole 108. The latter is caused by the absorption of the light ray by the light source 102 present in the neighbouring niche or hole 108 and by the fact that most light sources 102 used are in general not designed to recycle the light. The absorption of the light has a negative effect on the efficiency of the illumination system 100, 200. The thinner the light guiding means 104 and the longer the distance the light rays must travel before they are coupled out, the higher the photon density for a given number of light sources 102 corresponding with the wanted output intensity. As a result, the thinner the light guiding means 104 and the better the light mixing, the more probable it is that a light source 102 will absorb photons and the lower the efficiency of the system. So, a compromise must be made between good uniformity and a backlight as thin as possible on one side, and the optical efficiency on the other side.

The mixing means also may comprise diffusing means 206 incorporated in the light guiding means 104, as shown in Fig. 7b. The light guiding means 104 then is an optically clear matrix in which small particles 210 are dispersed that have a refractive index that is slightly different from the refractive index of the optically clear material. With slightly different refractive index is meant that the difference between the refractive index of the optically clear material of the light guiding means 104 and the refractive index of the particles 210 is between 0.2 and 0.03, preferably between 0.1 and 0.03. For the example of a light guiding means 104 in optically clear plastic, such as e.g. PMMA, glass particles can e.g. be used. The density and type of the particles 210 is chosen such that the scattering provided by refraction through the particles 210 induces a maximum predetermined change in direction for the majority of incident light rays. The predetermined change is such that the angle between a scattered ray, scattered by refraction through a particle 210, and the incident light ray is not larger than a maximum value, such as e.g. not larger than 30° for the majority of incident light. With the majority of incident light, at least 90% of the incident light, preferably 95% of the incident light and more preferably 99% of the incident light is meant. The particles 210 may e.g. be spherical particles, although the invention is not limited thereto. A typical dimension of such a particle, such as e.g. a diameter, may vary between 3 $\mu$m and 1 mm.

As a further alternative, shown in Fig. 7c, the mixing means also may comprise a diffusing sheet 208 laminated on the light out-coupling surface of the light guiding means 104. Such a diffusing sheet 208 may be built up as an optically clear matrix wherein small particles 210 are dispersed having a slightly different refractive index, similar as described above in more detail for particles 210 dispersed in the light guiding means 104, but the invention is not limited thereto. Other types of diffusing sheets 208 can also be used, provided that they have well-controlled and limited diffusing properties, such that the light is only coupled out after travelling a considerable distance in the light guiding means 104. The diffusing sheet 208 can be applied to the light guiding means 104 by e.g. sticking it to the surface. The sheet 208, a film, may be provided with a layer of pressure sensitive adhesive, such that it can be easily applied to the surface of the light guiding means 104.

The different alternative mixing means as recited above can be applied either separately or in combination with each other.

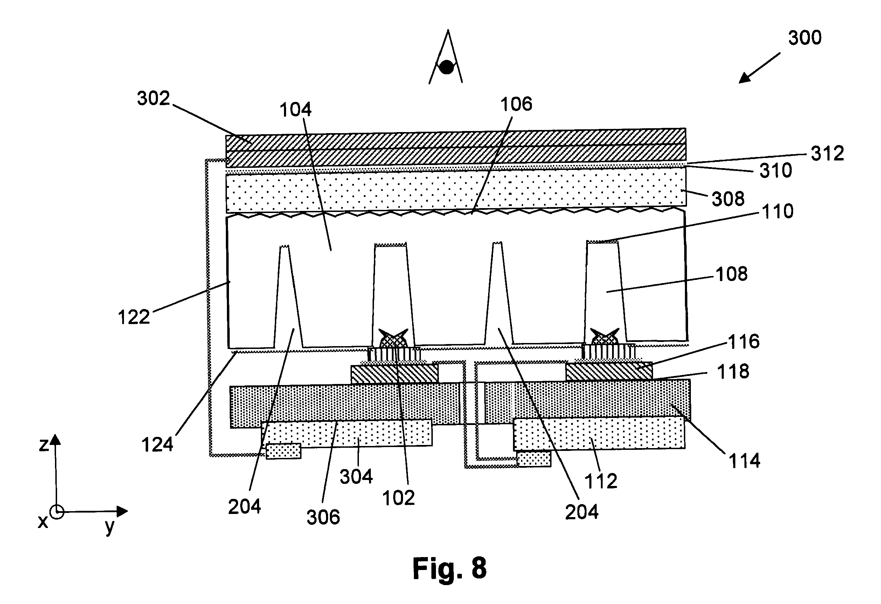

In a further embodiment, the present invention relates to a display system comprising an illumination system 100, 200 according to any of the previous embodiments, whereby the illumination system 100, 200 is used as a backlight system for non-emissive displays. These non-emissive display systems may be any type of display system using a light source 102, external to the light modulating part of the display system. Typically, such a non-emissive display system is a liquid crystal display (LCD), such as active matrix and passive matrix liquid crystal displays. An example of such a non-emissive display system 300 using a backlight illumination system according to the illumination systems of the previous embodiments of the present invention is shown in Fig. 8. Besides the parts of the illumination system 100, 200, described in any of the previous embodiments, the display system 300 furthermore comprises a light modulating means 302 for modulating the light emitted by the illumination system 100, 200 according to an input signal, such that an image is represented on the display system 300, and a corresponding driving means 304 for driving the light modulating means 302. The light modulator driving means 304 may be positioned near a heat sink 114 of the light sources 102. To increase the image quality, the system furthermore preferably comprises a diffuser plate 308 at the light out-coupling side A of the illumination system 100, 200, to hide small non uniformities such as the light blocking means above the light sources, and to reconvert the direction of the light rays that are coupled out mostly quite parallel with the reference plane, and optionally 1 or 2 light collimation films 310, such as e.g. brightness enhancement films (BEF) obtainable from the 3M company, and a polarisation recycling film 312, e.g. a dual brightness enhancement foil (DBEF) obtainable from the 3M company also. The collimation films 310 boost the peak luminance at perpendicular (on-axis) view, while the polarisation recycling film 312 increases the overall luminance. The polarisation recycling film 312 reflects the light having a polarisation direction that is perpendicular to the polarisation direction transmitted by the LCD, so that it can be recycled by the illumination system 100, 200 instead of being absorbed. Other components of the non-emissive display, as known by the person skilled in the art, also may be present.

The above embodiments all have the advantage that in or nearby the light guiding means 104, the light is mixed, preferably from as many light sources 102 as possible, before it is coupled out, although the light guiding means 104 and the corresponding illumination system 100, 200 are relatively thin (e.g. compared to direct backlight systems). This results in a good uniformity of the luminance and of the colour. Colour uniformity has a high priority in colour displays since the human eye is very sensitive to small colour variations. The latter has been a critical issue in all backlight systems in which light sources 102 of different colours, e.g. red, green and blue, are used.

It is also an advantage of the embodiments of the present invention that the light is inserted distributed over the illuminating area while the light is imprisoned in the light guiding means 104 by total internal reflection. In prior art systems, either the light sources 102, distributed over the illumination area emit their light in air, i.e. not in a light guiding means 104 as meant in the present application, or the light sources 102 are not distributed over the illumination area. In the latter case, the light sources are typically positioned on a number of lines and emission is often performed through the edge of a light guiding means.

It is an advantage of the embodiments of the present invention that none of the re-direction means, i.e. not the specially structured surface pattern 106, nor the other mixing means such as the anisotropic scattering means 204, the dispersed particles 210 or the diffusing sheet 208 has a random scattering distribution. The means all provide only a limited amount of adjustment to the vertical component of the propagation vector of the light, while the amount of change in the horizontal propagation vector can be large. The re-direction means thus are designed in such a way that most of the light rays, coupled in substantially horizontally, have to undergo at least two or three of those controlled scatterings before they can be coupled out from the light guiding means 104.

Other arrangements for accomplishing the objectives of the illumination methods and systems embodying the invention will be obvious for those skilled in the art. It is to be understood that although preferred embodiments, specific constructions and configurations, as well as materials, have been discussed herein for devices according to the present invention, various changes or modifications in form and detail may be made without departing from the scope and spirit of this invention.

## Claims

1. An illumination system comprising a plurality of light sources (102) and a light guiding means (104), said plurality of light sources (102) comprising at least light sources emitting light of a first type and at least light sources emitting light of a second type, said first type differing from said second type, said light guiding means (104) having a first surface (A), through which light is coupled out, and a second surface (B), opposite to said first surface (A), comprising a plurality of recesses (108) having a top side directed towards the first surface and one or more side portions, wherein said plurality of recesses (108) and said plurality of light sources (102) cooperate with each other such that said emitted light is coupled into the light guiding means (104) substantially distributed over said second surface (B) and is coupled into the light guiding means (104) through said one or more side portions of said plurality of recesses (108) and not through said top side.

2. An illumination system according to claim 1, wherein said illumination system comprises a light out-coupling means comprising a specially structured surface pattern (106) provided in at least part of said first surface (A) and/or of said second surface (B).

3. An illumination system according to claim 1, wherein said illumination system comprises a light out-coupling means with a film comprising a specially structured surface pattern, said film being laminated on at least part of said first surface (A) and/or of said second surface (B).

4. An illumination system according to any of claims 2 to 3, wherein said specially structured surface pattern comprises at least one region wherein, for substantially each point of said at least one region, the angle between the local normal on the tangent plane in said point and the normal on the average plane through said structured surface pattern is less than 20°, preferably between 5° and 10°, but larger than 0°.

5. An illumination system according to the previous claim, wherein said specially structured surface pattern furthermore comprises at least one region wherein, for substantially each point of said at least one region, the angle between the local normal on the tangent plane in said point and the normal on the average plane through said structured surface pattern is 0°.

6. An illumination system according to any of claims 1 to 5, said light guiding means having a first refractive index, wherein said light guiding means (104) comprises a plurality of small particles dispersed in said light guiding means, said small particles having a second refractive index differing from said first refractive index.

7. An illumination system according to any of claims 1 to 6, wherein said illumination system comprises a film, laminated on at least part of said first surface (A) and/or of said second surface (B), said film having a first refractive index and incorporating a plurality of small particles having a second refractive index differing from said first refractive index.

8. An illumination system according to any of claims 6 to 7, wherein the first and the second refractive index have a difference between 0.2 and 0.03.

9. An illumination system according to any of the previous claims, wherein said recesses (108) have a cylindrical shape or a conical or truncated conical shape having a top angle less than 20°, preferably less than 10°, more preferably less than 5°.

10. An illumination system according to any previous claim, wherein said plurality of recesses (108) are any of niches in said light guiding means (104) having a top portion or holes in said light guiding means (104) running through said light guiding means (104).

11. An illumination system according to any of the previous claims, wherein light blocking means (110) are provided in said plurality of recesses (108) to prevent light being coupled out through the top side of said recesses (108).

12. An illumination system according to any of the previous claims, wherein light blocking means (110) are provided on said plurality of light sources (102) to prevent light from being coupled out through the top side of said plurality of recesses (108).

13. An illumination system according to any of the previous claims, wherein each of said plurality of light sources (102) is positioned at least partly in said plurality of recesses (108).

14. An illumination system according to any of the previous claims, wherein said plurality of light sources (102) are light emitting diodes.

15. An illumination system according to claim 14, wherein said light emitting diodes are side emitting light emitting diodes.

16. An illumination system according to any of the previous claims, wherein said plurality of lights sources (102) comprises at least red emitting light sources, green emitting light sources and blue emitting light sources.

17. An illumination system according to any of the previous claims, wherein said light guiding means (104) is made of an optical clear material.

18. An illumination system according to the previous claim, wherein said optical clear material is polymethylmethacrylate (PMMA).

19. An illumination system according to any of the previous claims, furthermore comprising, anisotropic scattering means (204) in the form of cylindrical or conical holes or niches thereby improving mixing of the light.

20. An illumination system according to the previous claim, wherein said anisotropic scattering means (204) are positioned between said recesses to prevent direct impingement of light on a neighbouring recess (108) after light has been coupled in into said light guiding means (104) through a first recess.

21. An illumination system (100, 200) according to any of the previous claims, said system (100, 200) being used as backlight system in a display system (300).

22. An illumination system (100, 200) according to claim 21, wherein said display system (300) is a liquid crystal display system.

23. A method for illuminating using an illumination system comprising a plurality of light sources (102), including a first set of light sources emitting light of a first type and a second set of light sources emitting light of a second type, said first type differing from said second type, and a light guiding means (104) having a first surface (A), the method comprising

- emitting light of a first type from said first set of light sources and emitting light of a second type from said second set of light sources,
- coupling in said light emitted from the light sources (102) substantially parallel to said first surface (A) of said light guiding means (104) and distributed over said first surface (A)
- coupling out said light from said illumination system

**24.** A method according to claim 23, wherein coupling out said light from said illumination system is performed after deviating said light at least once in said light guiding means (104) maximally over an angle less than 40°, 0° not being included, preferably maximally over an angle between 20° and 10°.

**25.** An illumination system comprising a plurality of light sources (102) for emitting light and a light guiding means (104) having a first surface (A) through which light is coupled out, said light guiding means (104) being adapted for coupling in light from the light sources (102) substantially parallel to said first surface (A), wherein said light guiding means (104) furthermore comprises a specially structured surface pattern (106), with at least one region wherein, for substantially each point of said at least one region, the angle between the local normal on the tangent plane in said point and the normal on the average plane through said structured surface pattern is less than 20°, preferably between 5° and 10°, but larger than 0°.

**26.** An illumination system according to the previous claim, wherein said specially structured surface pattern furthermore comprises at least one region wherein, for substantially each point of said at least one region, the angle between the local normal on the tangent plane in said point and the normal on the average plane through said structured surface pattern is 0°.

**27.** An illumination system according to any of claim 25 to 26, wherein said specially structured surface pattern comprises a plurality of facets.

**28.** An illumination system according to any of claims 25 to 27, wherein said specially structured surface pattern (106) is at least on part of said first surface (A) and/or at least on part of an opposite side of the first surface (A) with respect to the light guiding means (104).

**29.** A method for illuminating using an illumination system comprising a plurality of light sources (102) and a light guiding means (104) having a first surface (A), the method comprising

- emitting light from said light sources (102),
- coupling in said light emitted from the light sources (102) substantially parallel with said first surface (A) of said light guiding means (104)
- reflecting at least once substantially all light coupled in thereby changing the angle of incidence of said light on said first surface (A) over an angle less than 40° but larger than 0°, preferably over an angle between 20° and 10°, and
- coupling out the light through the first surface (A) after said at least one reflection.

**Fig.1**

**Fig. 2**

104  109

111

110

z

102

x  y

108

**Fig. 3**

A'

θ

α

**Fig. 4a**

106

**Fig. 4b**

106

**Fig. 4c**

Fig. 5

Fig. 6

**Fig. 7a**

EP 1 640 756 A1

**Fig. 7b**

EP 1 640 756 A1

EP 1 640 756 A1

**Fig. 7c**

EP 1 640 756 A1

**Fig. 8**

**European Patent Office**

**EUROPEAN SEARCH REPORT**

Application Number

EP 04 44 7214

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 152 569 A (AIZAWA ET AL) 28 November 2000 (2000-11-28) * figure 1b * ----- | 1-29 | G02B6/42 G02B6/00 |
| A | PATENT ABSTRACTS OF JAPAN vol. 2003, no. 11, 5 November 2003 (2003-11-05) & JP 2003 187623 A (SHARP CORP), 4 July 2003 (2003-07-04) * abstract * ----- | 1-29 | |

**TECHNICAL FIELDS SEARCHED (Int.Cl.7)**

G02B

The present search report has been drawn up for all claims

| Place of search | Date of completion of the search | Examiner |
|---|---|---|
| Munich | 2 February 2005 | Yenidunya, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

**EP 1 640 756 A1**

## ANNEX TO THE EUROPEAN SEARCH REPORT
## ON EUROPEAN PATENT APPLICATION NO.

EP 04 44 7214

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2005

| Patent document cited in search report | | Publication date | Patent family member(s) | | Publication date |
|---|---|---|---|---|---|
| US 6152569 | A | 28-11-2000 | JP | 11237629 A | 31-08-1999 |
| | | | DE | 19905865 A1 | 21-10-1999 |
| JP 2003187623 | A | 04-07-2003 | NONE | | |

EPO FORM P0459

For more details about this annex : see Official Journal of the European Patent Office, No. 12/82

25